# EUROPEAN PATENT APPLICATION

(11) **EP 3 718 662 A1**
(43) Date of publication of application: **07.10.2020**
(21) Application number: 19167347.4
(22) Date of filing: 04.04.2019
(51) Int. Cl.: B22F 3/105, B33Y 30/00, B33Y 40/00, B29C 64/153

(54) **APPARATUS AND METHOD FOR ADDITIVELY MANUFACTURING AT LEAST ONE COMPONENT**

(71) Applicant: Siemens Aktiengesellschaft, 80333 München (DE)
(72) Inventor: Lebed, Yaroslav, 13629 Berlin (DE)

(57) **Abstract**

The invention relates to an apparatus (10) for additively manufacturing components (12). The apparatus (10) comprises a powder coater (28). The powder coater (28) is translationally movable into both a first direction (30) and a second direction (32) in relation to a platform (14) so as to apply powder (22) onto the platform (14). The first and second directions (30, 32) are opposite each other. The powder coater (28) comprises two blades (34) for applying the powder (22) onto the platform (14) when moving the powder coater (28) into the first and second directions (30). The blades (34, 36) are arranged opposite each other. The blades (34, 36) are translationally movable along a third direction (26) extending perpendicularly in relation to the first and second directions (30, 32) direction.

## Description

The invention relates to an apparatus and a method for additively manufacturing at least one component.

Additive manufacturing or additive manufacturing processes are well-known from the prior art. For example, such an additive manufacturing process can be a powder-bed method or a powder-bed process in which a powder, i.e. granular matter, is applied on a substrate such as a platform. Subsequently, at least a portion of the powder arranged on the substrate is subjected to at least one energy beam by which at least the portion is heated. Thereby, the portion or particles forming the portion is or are heated and thereby linked together or connected with each other. For example, by heating the portion and, thus, the particles forming the portion, the particles can be sintered so that the particles stick together and, thus, are connected with each other. Alternatively the portion or the particles forming the portion is or are molten by the energy beam thereby connecting the particles with each other. By heating at least the portion, i.e. by connecting the particles forming the portion with each other, a layer is created on the platform. Subsequently, powder is applied onto the substrate and the created layer. From the powder arranged on the substrate and the layer, another layer is created in the aforementioned way. The layers are connected with each other thereby additively manufacturing at least one component in layers, i.e. layer by layer. For example, such an additive manufacturing process can be selective laser melting (SLM), so that, for example, said energy beam can be a laser beam.

It is an object of the present invention to provide an apparatus and a method by which at least one component can be manufactured in a particularly cost- and time-efficient way by additive manufacturing.

This object is solved by an apparatus having the features of patent claim 1 and a method having the features of patent claim 12. Advantageous embodiments with expedient developments of the invention are indicated in the other patent claims.

A first aspect of the present invention relates to an apparatus for additively manufacturing at least one component or several components. Thus, the apparatus according to the present invention is configured to carry out at least one additive manufacturing process which is also referred to as an additive manufacturing method. Preferably, said additive manufacturing process is a powder-bed method. Preferably, said additive manufacturing process can be selective laser melting (SLM) or another additive manufacturing process.

The apparatus according to the present invention comprises at least one platform which is also referred to as a substrate, substrate plate or substrate platform. The apparatus according to the present invention further comprises at least one powder coater which is also referred to as a coater. The powder coater is translationally movable along a moving direction in relation to the platform. Preferably, the moving direction is straight. For example, the platform extends in a plane, wherein the moving direction extends in the plane or parallel to the plane. In other words, the platform can have a surface which, for example, faces the powder coater. Therein, the surface extends in a plane, wherein the moving direction extends in the plane or parallel to the plane.

The powder coater is translationally movable into a first direction in relation to the platform so as to apply powder for additively manufacturing the component onto the platform. In other words, powder for additively manufacturing the component can be applied onto the platform by moving the powder coater translationally into the first direction in relation to the platform. The first direction coincides with the moving direction.

Moreover, the powder coater is translationally movable into a second direction in relation to the platform so as to apply powder for additively manufacturing the component onto the platform. In other words, powder from which the component can be additively manufactured can be or is applied onto the platform by moving the powder coater into the second direction. The second direction coincides with the moving direction, wherein the second direction is opposite to the first direction. This means, for example, the powder coater is a bidirectional coater or a bidirectionally movable coater since the powder coater can be moved both into the first direction and the opposite second direction. Thus, for example, the powder coater can be reciprocated or reciprocatingly moved so that, for example, the powder coater is a reciprocating, bidirectional coater.

The step or process of applying the powder onto the platform is also referred to as delivering the powder to or onto the platform or depositing the powder on or onto the platform. Moreover, the step or process of applying the powder onto the platform is also referred to as coating the platform with the powder. The platform is also referred to as a plate or build plate. Conventionally, devices for additively manufacturing components are configured such that devices for coating the platform with powder can be moved in one direction only in relation to the platform. The coating process, however, is a significant contributor to the time for additively manufacturing the component. This means that the respective component can be manufactured the more quickly the more quickly the platform can be coated with the powder. In other words, it is desirable to make the coating process in which the powder is applied onto the platform as quick as possible. In this regard, the present invention helps realize a particularly fast coating process in which the platform is coated with the powder since the powder coater can be translationally moved into both the first direction and the second direction in relation to the platform. Thus, the platform can be coated in both directions, thus avoiding empty travel of the powder coater.

Moreover, the powder coater comprises a first blade for applying the powder onto the platform when moving the powder coater into the first direction. In other words, when the powder coater is moved into the first direction so as to coat the platform with the powder, the powder is applied onto the platform by the first blade. In other words, the platform is coated with the powder by the first blade when moving the powder coater into the first direction. Furthermore, the powder coater comprises a second blade for applying the powder onto the platform when moving the powder coater into the second direction. In other words, when moving the powder coater into the second direction so as to coat the platform with the powder, the platform is coated with the powder by the second blade. In order to coat the platform with the powder particularly fast, precisely and with a high quality, the blades are arranged, along the moving direction, opposite each other.

Furthermore, the blades are, in relation to each other, translationally movable along a third direction extending obliquely or, preferably, perpendicularly in relation to the moving direction. Thus, for example, the third direction extends obliquely or, preferably, perpendicularly in relation to the aforementioned plane and, thus, in relation to the platform or its surface. The surface of the platform is also referred to as a surface platform. For example, the respective blade is a respective knife.

It has been found that if the blades, in particular their edges, were always at the same level along the third direction the powder coater could collide with the already manufactured component or an already manufactured portion of the component arranged on the platform thereby destroying or damaging the component or the already manufactured portion of the component. It has particularly been found that the blade colliding with the component or the manufactured portion of the component is that blade which is currently not coating the platform when moving the powder coater. Since, according to the present invention, the blades can be moved in relation to each other along the third direction a collision of the blades with the component or an already manufactured portion of the component can be avoided when moving the powder coater along the moving direction. Thus, the component can be manufactured in a particularly time- and cost-efficient way. Preferably, when moving the powder coater along the moving direction and coating the platform, the non-coating knife or blade is arranged higher and, thus, further away from the platform along the third direction so that collisions between the powder coater and the component which is also referred to as a built-part can be avoided.

Thus, by the present invention, a reliable collision-free bidirectional coating of the platform can be realized which results in a reduced printing time. Moreover, wasted production time caused by collisions can be avoided. Moreover, the powder coater of the present invention can be used for both bidirectional and unidirectional coating. Furthermore, the invention allows for exceptionally easy setup of the respective height of the respective blade along the third direction, and the invention allows for an exceptionally easy setup of an alignment of the blades above and with the focal plane. For example, the third direction extends vertically so that, for example, the third direction is a vertical direction. Since, for example, the third direction can extend perpendicularly to the moving direction, the moving direction extends horizontally. In other words, the moving direction can be a horizontal direction. Thus, for example, the powder coater or the blades can be moved both vertically and horizontally so that the component can be additively manufactured in a particularly cost- and time-efficient way.

Preferably, the component can be manufactured in layers, i.e. layer by layer by the additive manufacturing process and, thus, the apparatus according to the present invention.

In a particularly advantageous embodiment of the invention the powder coater comprises a frame which can be a housing or a part of a housing of the powder coater. Therein, the blades are translationally moveably arranged on the frame so that both the first blade and the second blade can be translationally moved in relation to each other and in relation to the frame along the third direction. Thus, respective positions of the blades in relation to each other and in relation of the frame as well as respective distances between the blades and the platform can be adjusted in a need-based manner. For example, the respective distance extends in the third direction. Hence, the component can be manufactured in a particularly time- and cost-efficient way.

In a further advantageous embodiment of the invention the first blade is, in relation to the frame and the second blade, translationally movable along the third direction. Moreover, the second blade is, in relation to the frame and the first blade, translationally movable along the third direction. Thus, respective positions of the blades in relation to the platform and, thus, in relation to the component or an already manufactured portion of the component can be adjusted in a particularly need-based manner. Hence, the component can be manufactured particularly time- and cost-efficiently.

In order to avoid damages of the component, in a further embodiment of the invention, the respective blade is, along the third direction, supported on the frame and/or the respective actuator via at least one spring. The spring allows for movements of the respective blade along the third direction in relation to the frame and/or the respective actuator so that, for example, the respective blade can dodge the component arranged on the platform. Thus, damages of the component can be avoided and the component can be manufactured in a particularly easy and time- and cost-efficient way.

In a particularly advantageous embodiment of the invention the powder coater comprises a driving device for translationally moving the blades in relation to each other along the third direction, wherein the driving device is arranged on the frame. Thus, the blades can be moved in a fast and need-based manner by the driving device so that collisions can be avoided and the component can be manufactured particularly easily. Moreover, the blades can be moved automatically by the driving device during the additive manufacturing process.

In a further advantageous embodiment of the invention the driving device comprises a first actuator for translationally moving the first blade in relation to the frame and the second blade along the third direction. Moreover, the driving device comprises a second actuator for translationally moving the second blade in relation to the frame and the first blade along the third direction. Thus, the blades can be moved in a need-based manner and very fast. Preferably, the respective actuator is a linear actuator so that the respective blade can be moved particularly fast. Preferably, the second actuator is provided in addition to the first actuator and vice versa. Moreover, preferably, the actuator are two individual actuators. In other words, the actuators are respective, individual actuators. Thus, respective positions of the respective blades can be adjusted particularly precisely in a need-based manner.

In a further advantageous embodiment of the invention the powder coater comprises at least one duct through which the respective powder can flow so as to apply the respective powder onto the platform by the powder coater. Thereby, the platform can be coated with the powder particularly fast so that the component can be manufactured particularly fast.

In order to apply the powder onto the platform particularly fast, precisely and with a high quality, in a further embodiment of the invention, the duct has an outlet opening through which the powder flowing through the duct can leave the duct so as to apply the powder onto the platform via the outlet opening. Therein, the outlet opening is arranged, along the moving direction, between the blades. Thus, the powder can be applied onto the platform and spread or distributed on the platform particularly precisely. Thus, the component can be manufactured in a particularly cost- and time efficient way.

Preferably, the apparatus comprises a conveying device by which the respective powder can be conveyed through the duct and the outlet opening thereby applying the powder onto the platform.

In order to additively manufacture the component particularly fast, in a further embodiment of the invention, the apparatus comprises at least one first reservoir configured to receive the powder for additively manufacturing the component. Moreover, the apparatus comprises at least one second reservoir configured to receive the powder for additively manufacturing the component. The reservoirs are arranged opposite each other along the moving direction. Preferably, the moving direction is straight, i.e. a straight direction. Therein, the platform is arranged, along the moving direction, between the reservoirs. Furthermore, the powder coater is translationally movable along the moving direction to the reservoirs and the platform. Furthermore, the powder coater is translationally movable into the first direction in relation to the reservoirs and the platform so as to transfer the powder from the first reservoir onto the platform. For example, by moving the powder coater into the first direction at least a portion of the powder received in the first reservoir can be pushed, slid or shifted from the first reservoir onto the platform by the powder coater, in particular by the first blade.

Furthermore, the powder coater is translationally movable into the second direction in relation to the reservoirs and the platform so as to transfer the powder from the second reservoir onto the platform. For example, at least a portion of the powder received in the second reservoir can be pushed, slid or shifted from the second reservoir onto the platform by the powder coater, in particular by the second blade by translationally moving the powder coater into the second direction. Thus, the platform can be coated with the powder in a particularly fast way.

Therein, preferably, the powder coater comprises the first blade for transferring, in particular for pushing, moving sliding or shifting the powder from or out of the first reservoir onto the platform when moving the powder coater into the first direction. For example, the powder from the first reservoir is pushed onto and distributed on the platform by the first plate when moving the powder coater into the first direction.

Moreover, the powder coater comprises the second blade for transferring the powder from the second reservoir onto the platform when moving the powder coater into the second direction. For example, by or when moving the powder coater into the second direction at least a portion of the powder received in the second reservoir is pushed, moved, slid or shifted from or out of the second reservoir onto the platform by the second blade. Preferably, by the second blade, the powder from or out of the second reservoir is shifted onto and distributed on the platform when or by moving the powder coater and, thus, the blades into the second direction.

In order to additively manufacture the component in a particularly efficient way, in a further embodiment of the invention, the first reservoir is, along the moving direction, arranged between the platform and a first overflow bin for receiving excessive powder from the second reservoir. Moreover, the second reservoir is, along the moving direction, arranged between the platform and a second overflow bin for receiving excessive power from the first reservoir. In other words, when powder for coating the platform is transferred from the first reservoir or the second reservoir respectively onto the platform excessive powder which does not stay on the platform can be received by the respective overflow bin. The excessive powder received by the respective overflow bin can thus be used again, for example in a following step in which a further layer is created.

A second aspect of the present invention relates to a method for additively manufacturing at least one component by an apparatus, in particular an apparatus according to the present invention. Thus, preferably, the apparatus according to the first aspect of the present invention is configured to carry out a method according to the second aspect of the present invention. In the method according to the present invention, the apparatus comprises at least one platform and at least one powder coater which is translationally moved along a moving direction in relation to the platform.

Therein, the powder coater is translationally moved into a first direction in relation to the platform so as to apply powder for additively manufacturing the component onto the platform, the first direction coinciding with the moving direction. Moreover, the powder coater is translationally moved into a second direction in relation to the platform so as to apply powder for additively manufacturing the component onto the platform. Therein, the second direction coincides with the moving direction, and the second direction is opposite to the first direction. The powder coater comprises a first blade for applying powder onto the platform when moving the powder coater into the second direction. In other words, when moving the powder coater into the first direction, powder for additively manufacturing the component is applied onto the platform by the first blade.

Moreover, the powder coater comprises a second blade for applying powder onto the platform when moving the powder coater into the second direction. In other words, when the powder coater is moved into the second direction for applying powder onto the platform, the powder for additively manufacturing the component is applied onto the platform by the second blade. The blades are arranged opposite each other along the moving direction. Moreover, the blades are, in relation to each other, translationally moved along a third direction which extends obliquely or, preferably, perpendicularly in relation to the moving direction. Advantages and advantageous embodiments of the first aspect of the invention are to be regarded as advantages and advantageous embodiments of the second aspect of the invention and vice versa.

In a particularly advantageous embodiment of the invention, the second blade is arranged in front of the first blade with respect to the first direction whilst moving the powder coater into the first direction. Moreover, whilst moving the powder coater into the second direction, the first blade is arranged in front of the second blade with respect to the second direction. Thus, the powder can be applied onto and distributed on the platform particularly precisely so that the component can be manufactured in a particularly time- and cost-efficient way.

For example, whilst moving the power coater into the first direction, the second blade is, along the moving direction, arranged between the first blade and the second reservoir. Alternatively or additionally, whilst moving the powder coater into the second direction, the first blade is, along the moving direction, arranged between the second blade and the first blade.

In a further embodiment of the invention, whilst moving the powder coater into the first direction, the first blade is, along the third direction, arranged closer to the platform than the second blade. Whilst moving the powder coater into the second direction, the second blade is, along the third direction, arranged closer to the platform than the first blade. Thus, collisions can be avoided so that the component can be manufactured particularly cost- and time-efficiently.

Preferably, the additive manufacturing process can be printing process or a 3D printing process in which the component is printed, in particular 3D printed by the apparatus. Thus, for example, the apparatus can be a printer or 3D printer. Furthermore, for example, the method according to the invention can be said additive manufacturing process.

Further advantages, features, and details of the invention derive from the following description of a preferred embodiment as well as from the drawings. The features and feature combinations previously mentioned in the description as well as the features and feature combinations mentioned in following description of the figures and/or shown in the figures alone can be employed not only in the respective indicated combination but also in any other combination or taken alone without leaving the scope of the invention.

The drawings show in:
- FIG 1: a schematic and sectional side view of an apparatus according to the present invention; and
- FIG 2: a schematic and sectional side view of a powder coater of the apparatus.

In the figures the same elements or elements having the same functions are indicated by the same reference signs.

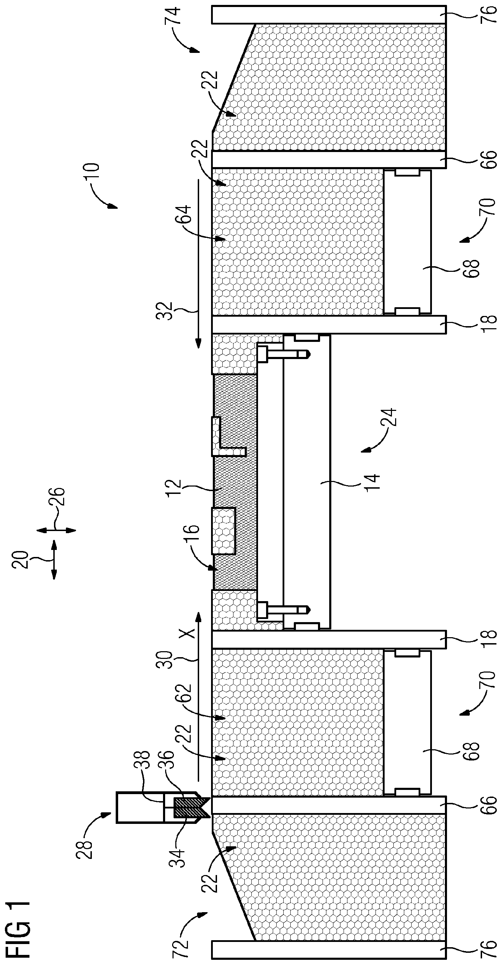

FIG 1 shows in a schematic and sectional side view an apparatus 10 for additively manufacturing at least one component. In FIG 1, an element is indicated by 12. For example, the element 12 can be said, in particular manufactured, component. Alternatively, the element 12 be an already manufactured portion of the component. As can be seen from FIG 1 the apparatus 10 comprises at least one platform 14 which is also referred to as a building platform, plate, building plate or substrate. The platform 14 confines or limits a building chamber 16 of the apparatus 10, wherein the building chamber 16 is also confined, limited or bound by side walls 18 of the apparatus 10. The building chamber 16 is confined by the side walls 18 in a moving direction on both sides, said moving direction being illustrated in FIG 1 by a double arrow 20. The component can be additively manufactured by the apparatus 10. This means the apparatus 10 is configured to carry out an additive manufacturing process which is also referred to as an additive manufacturing method or additive manufacturing. By the additive manufacturing process the component can be or is manufactured in layers, i.e. layer by layer. This means several layers are created subsequently by the apparatus 10, wherein the layers are arranged on one another. Moreover, preferably, the layers are connected with each other, wherein the component is built and, thus, manufactured as made from the layers. Each layer is made from a powder 22. The powder 22 is formed by granular matter from which each layer and thus the component is manufactured.

The platform 14 is arranged in a building cylinder 24 confined by the side walls 18 at least along the moving direction. The platform 14 is translationally movable arranged in the building cylinder 24 so that the platform 14 can be translationally moved along a platform direction in relation to the side walls 18. Said platform direction is illustrated by a double arrow 26.

The apparatus 10 further comprises a powder coater 28 which can be translationally moved along the straight moving direction in relation to the platform 14 and in relation to the side walls 18. The powder coater is translationally movable into a first direction in relation to the platform 14 so as to apply the powder 22 or at least a portion of the powder 22 onto the platform, the first direction coinciding with the moving direction. In FIG 1, the first direction is indicated by an arrow 30. Moreover, the powder coater 28 can be translationally moved into a second direction in relation to the platform 14 and in relation to the side walls 18 so as to apply the powder 22 or at least a portion of the powder 22 onto the platform 14. In FIG 1, the second direction is indicated or illustrated by an arrow 32. The second direction coincides with the moving direction, too. Moreover, the second direction is opposite to the first direction. Furthermore, the power coater 28 comprises a first blade 34 for applying the powder or at least the portion of the powder onto the platform 14 when moving the powder coater 28 into the first direction. Furthermore, the powder coater 28 comprises a second blade 36 for applying the powder or at least the portion of the powder onto the platform 14 when moving the powder coater 28 into the second direction. The blades 34 and 36 are arranged, along the moving direction, opposite each other. Moreover, the blades 34 and 36 are, in relation to each other, translationally movable along a third direction extending obliquely or perpendicularly in relation to the moving direction. In the embodiment shown in the figures, the third direction extends perpendicularly to the moving direction, so that the third direction is also illustrated by the double arrow 26. Thus, the third direction coincides with the platform direction or the third direction extends parallel to the platform direction.

A respective trip of the powder coater 28 which applies the powder 22 onto the platform 14 in that trip is also referred as a coating trip. For example, in order to create a first one of said layers on the platform 14, the power coater 28 is moved into the first direction so that, for example, the powder coater 28 carries out a first coating trip. Thereby, a first portion of the powder 22 is applied onto the platform 14. Subsequently, at least a first part of the first portion arranged on the platform 14 is subjected to an energy beam such as, for example, a laser beam. Thus, the first part of the first portion arranged on the platform 14 is heated. Thereby, first particles forming the first part of the powder arranged on the platform 14 are heated and, thus, connected with each other. Thereby, the first layer is created from the heated particles. Subsequently, for example, the platform 14 and, thus, the first layer are moved along the platform direction downwards in relation to the side walls 18. This means, the platform 14 and thus, the first layer are translationally moved along the platform direction away from the powder coater 28. Subsequently, the powder coater 28 is moved into the second direction so that the powder coater 28 performs a second coating trip. Thereby, at least a second portion of the powder 22 is applied onto the platform 14 and the first layer. Subsequently, at least a second part of the second portion arranged on the platform 14 and the first layer is subjected to the energy beam thereby heating second particles forming the second part of the second portion arranged on the platform 14 and the first layer. Thereby, the heated second particles are connected with each other thereby creating a second layer from the heated second particles, the second layer being arranged at least partially on the first layer. Moreover, the second layer is connected with the first layer. For example, at least one further layer or several further layers can be manufactured or created in the aforementioned way thereby additively manufacturing the component from the layers.

Since the powder coater 28 can be moved both into the first direction and into the second direction the platform 14 can be coated with the powder 22 in a particularly fast way. Thus, the component can be manufactured in a particularly time- and cost-efficient way. Moreover, since the blades 34 and 36 can be moved along the third direction collisions between the powder coater 28 and the component or the already manufactured portion of the component can be avoided. Thus, the component can be manufactured in a particularly time- and cost-efficient way. Preferably, the moving direction coincides with a horizontal direction, so that, for example, the moving direction extends horizontally. Alternatively or additionally, the third direction is a vertical direction so that, for example, the third direction coincides with the vertical direction or extends vertically. Thus, the powder coater 28 is a vertically and horizontally reciprocating bidirectional coater by which the platform 14 can be coated with the powder 22 particularly fast.

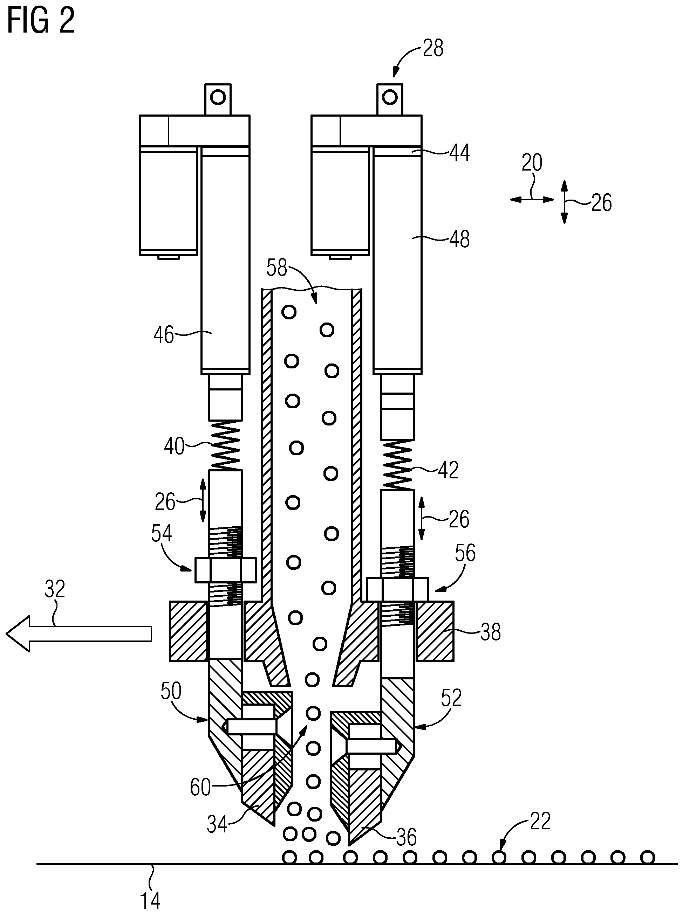

As can be seen from FIG 2, the powder coater 28 can comprise a frame 38 which is also referred to as a carrier or a moving coater-frame. Therein, the blades 34 and 36 are translationally moveably arranged on the frame 38. Moreover, the first blade 34 is, in relation to the frame and the second blade 36, translationally movable along the third direction, and the second blade 36 is, in relation to the frame 38 and the first blade 34, translationally movable along the third direction (double arrow 26). Moreover, the respective blade 34 or 36 is, along the third direction, supported on the frame 38 via at least one respective spring 40 or 42. Thus, the springs 40 and 42 allow translational movements of the blades 34 and 36 in relation to the frame 38 so that damages of the component arranged on the platform 14 can be avoided.

Moreover, the powder coater 28 comprises a driving device 44 for translationally moving the blades 34 and 36 in relation to each other and in relation to the frame 38 along the third direction, the driving device 44 being arranged on the frame 38 at least indirectly. Therein, the driving device 44 comprises a first linear actuator 46 and a second linear actuator 48. The first linear actuator 46 is configured to translationally move the first blade 34 in relation to the frame 38 and the second blade 36 along the third direction. Moreover, the second linear actuator 46 is configured to translationally move the second blade 36 in relation to the frame 38 and the first blade 34 along the third direction.

Moreover, alternatively or additionally, the respective blade 34 or 36 is, along the third direction, supported on the respective linear actuator 46 or 48 via the respective spring 40 or 42 respectively. Thus, the blades 34 and 36 can move along the third direction in relation to the actuators 46 and 48 so that damages of the component can be avoided. Hence, the springs 40 and 42 are buffer springs which allow translational movements of the blades 34 and 36 along the third direction in relation to the actuators 46 and 48 and in relation to the frame 38.

Furthermore, the powder coater 28 comprises a holding device 50 or 52 by which the respective blade 34 or 36 is, in particular reversibly, held on the respective actuator 46 or 48. In the embodiment shown in FIG 2, the respective holding device 50 or 52 is configured as a clamping device by which the respective blade 34 or 36 is clamped and thereby held on the actuator 46 or 48 respectively. Furthermore, the powder coater 28 comprises level setting devices 54 and 56. By the respective level setting device 54 or 56 the respective holding device 50 or 52 and thus the respective blade 34 or 36 can be translationally moved along the third direction in relation to the frame 38 and in relation to the actuator 46 or 48 so that a respective initial position of the respective blade 34 or 36 can be adjusted, in particular are manually adjusted, along the third direction in relation to the frame 38 and, thus, in relation to the actuators 46 and 48. The blades 34 and 36 are in their initial positions when the blades 34 and 36 are not moved by the actuators 46 and 48, are not held in positions different from the initial positions and the springs 40 and 42 are at least partially relaxed or unloaded.

Preferably, the powder coater 28 can comprise at least one duct 58 through which the powder 22 can flow so as to apply the powder 22 onto the platform 14 by the powder coater 28. Therein, the ducts 58 has at least one outlet opening 60 through which the powder 22 flowing through the duct 58 can leave the duct 58 so as to apply the powder 22 onto the platform 14 via the outlet opening 60. The outlet opening 60 is arranged between the blades 34 and 36 along the moving direction. Preferably, the apparatus 10 comprises a conveying device not shown in the figures, the conveying device being configured to convey the powder 22 through the duct 58 and the outlet opening 60.

As can be seen from FIG 1, the apparatus 10 can comprise at least one first reservoir 62 configured to receive the powder 22 or at least a portion of the powder 22 for additively manufacturing the component. Moreover, the apparatus 10 can comprise a second reservoir 64 for receiving the powder 22 or at least a portion of the powder 22 for additively manufacturing the component. The reservoirs 62 and 64 are arranged opposite each other along the moving direction. Furthermore, the platform 14 is arranged, along the moving direction, between the reservoirs 62 and 64. For example, the powder coater 28 is translationally movable into the first direction in relation to the reservoirs 62 and 64 and the platform 14 so as to transfer, shift, move or slide the powder 22 from or out of the first reservoir 62 onto the platform 14. Moreover, the powder coater 28 is translationally movable into the second direction in relation to the reservoir 62 and 64 and the platform 14 so as to transfer, slide, push, move or dose the powder 22 from or out of the reservoir 64 onto the platform 14, thereby applying the powder 22 onto the platform 14. Therein, the first blade is used for transferring the powder 22 from the first reservoir 62 onto the platform 14 by moving the powder coater 28 into the first direction. Moreover, the second blade 36 is used to transfer the powder 22 from the second reservoir 64 onto the platform 14 removing the powder coater 28 into the second direction. For example, the respective reservoir 62 or 64 is confined along the moving direction by one of the side walls 18 and a further side wall 66 of the apparatus 10 respectively. Moreover, the reservoir 62 or 64 is partially confined by a piston 68 which is translationally moveably arranged in a respective reservoir cylinder 70 confined by the respective side wall 18 and the respective side wall 66. Thus, the respective piston 68 can be moved along the third direction in relation to the side walls 18 and 66.

Moreover, the apparatus 10 comprises a first overflow bin 72 and a second overflow bin 74, wherein the first reservoir 62 is arranged between the platform 14 and the overflow bin 72 along the moving direction. Moreover, the second reservoir 64 is arranged between the platform 14 and the second overflow bin 74 along the moving direction. Moreover, the overflow bin 72 or 74 is confined along the moving direction by the side wall 66 and a further side wall 76 respectively. The respectively overflow bin 72 or 74 is configured to receive excessive powder from the respective reservoir 62 or 64. In other words, the first overflow bin 72 is used for receiving excessive powder from the second reservoir 64 as a result of the second coating trip, for example. Moreover, the overflow bin 74 is used for receiving excessive powder from the first reservoir 62 as a result of the first coating trip, for example.

As can be seen from FIG 2, whilst moving the powder coater 28 into the first direction, the second blade 36 is arranged in front of the first blade 34 with respect to the first direction. Moreover, whilst moving the powder coater 28 into the second direction, the first blade 34 is arranged in front of the second blade 36 with respect to the second direction. Furthermore, whilst moving the powder coater 28 into the first direction, the first blade 34 is, along the third direction, arranged closer to the platform 14 than the second blade 36. Moreover, whilst moving the powder coater 28 into the second direction, the second blade 36 is, along the third direction, arranged closer to the platform 14 than the first blade. FIG 2 shows, for example, the second coating trip in which the blade 34 is not in use and thus lifted, whilst the blade 36 is in use and thus used to coat the platform 14 with the powder 22. Thus, the blade 36 is lowered in relation to the blade 34 which is lifted in relation to the blade 36. Thus, collisions between the blade 34 and the component or the already manufactured portion of the component can be avoided. During the first coating trip the blade 34 is used to coat the platform 14 with the powder 22. Thus, during the first coating trip, the blade 36 is not in use, i.e. not used to coat the platform 14 with the powder 22. Thus, during the first coating trip, the blade 34 is lowered in relation to the blade 36, and the blade 36 is lifted in relation to the blade 34.

## Claims

1. An apparatus (10) for additively manufacturing at least one component (12), the apparatus (10) comprising:
- at least one platform (14); and
- at least one powder coater (28) translationally movable along a moving direction (20) in relation to the platform (14), wherein:
∘ the powder coater (28) is translationally movable into a first direction (30) in relation to the platform (14) so as to apply powder (22) for additively manufacturing the component (12) onto the platform (14), the first direction (30) coinciding with the moving direction (20);
∘ the powder coater (28) is translationally movable into a second direction (32) in relation to the platform (14) so as to apply powder (22) for additively manufacturing the component (12) onto the platform (14), the second direction (32) coinciding with the moving direction (20), and the second direction (32) being opposite to the first direction (30);
∘ the powder coater (28) comprises a first blade (34) for applying the powder (22) onto the platform (14) when moving the powder coater (28) into the first direction (30);
∘ the powder coater (28) comprises a second blade (36) for applying the powder (22) onto the platform (14) when moving the powder coater (28) into the second direction (32);
∘ the blades (34, 36) are arranged, along the moving direction (20), opposite each other; and
∘ the blades (34, 36) are, in relation to each other, translationally movable along a third direction (26) extending obliquely or perpendicularly in relation to the moving (20) direction.

2. The apparatus (10) according to claim 1,
wherein the powder coater (28) comprises a frame (38), and wherein the blades (34, 36) are translationally movably arranged on the frame (38) at least indirectly.

3. The apparatus (10) according to claim 2,
wherein:
- the first blade (34) is, in relation to the frame (38) and the second blade (36), translationally movable along the third direction (26); and
- the second blade (36) is, in relation to the frame (38) and the first blade (34), translationally movable along the third direction (26).

4. The apparatus according to claim 2 or 3,
wherein the powder coater (28) comprises a driving device (44) for translationally moving the blades (34, 36) in relation to each other along the third direction (26), the driving device (44) being arranged on the frame (38).

5. The apparatus according to claims 3 and 4,
wherein the driving device (44) comprises:
- a first actuator (46) for translationally moving the first blade (34) in relation to the frame (38) and the second blade (36) along the third direction (26); and
- a second actuator (48) for translationally moving the second blade (36) in relation to the frame (38) and the first blade (34) along the third direction (26).

6. The apparatus according to claim 5,
wherein the respective actuator (46, 48) is a linear actuator.

7. The apparatus (10) according to any one of claims 2 to 6,
wherein the respective blade (34, 36) is, along the third direction (26), supported on the frame (38) and/or the respective actuator (46, 48) via at least on spring (40, 42).

8. The apparatus (10) according to any one of the preceding claims,
wherein the powder coater (28) comprises at least one duct (58) through which the powder (22) can flow so as to apply the powder (22) onto the platform (14) by the powder coater (28).

9. The apparatus (10) according to claim 8,
wherein the duct (58) has an outlet opening (60) through which the powder (22) flowing through the duct (58) can leave the duct (58) so as to apply the powder (22) onto the platform (14) via the outlet opening (60), the outlet opening (60) being arranged, along the moving direction (20), between the blades (34, 36).

10. The apparatus (10) according to any one of the preceding claims, the apparatus (10) comprising:
- at least one first reservoir (62) configured to receive the powder (22) for additively manufacturing the component (12); and
- at least one second reservoir (64) configured to receive the powder (22) for additively manufacturing the component (12), the reservoirs (62, 64) being arranged opposite each other along the moving direction (20), wherein:
∘ the platform (14) is arranged, along the moving direction (20), between the reservoirs (62, 64);
∘ the powder coater (28) is translationally movable along the moving direction (20) in relation to the reservoirs (62, 64) and the platform (14);
∘ the powder coater (28) is translationally movable into the first direction (30) in relation to the reservoirs (62, 64) and the platform (14) so as to transfer the powder (22) from the first reservoir (62) onto the platform (14);
∘ the powder coater (28) is translationally movable into the second direction (32) in relation to the reservoirs (62, 64) and the platform (14) so as to transfer the powder (22) from the second reservoir (64) onto the platform (14) ;
∘ the powder coater (28) comprises the first blade (34) for transferring the powder (22) from the first reservoir (62) onto the platform (14) when moving the powder coater (28) into the first direction (30); and
∘ the powder coater (28) comprises the second blade (36) for transferring the powder (22) from the second reservoir (64) onto the platform (14) when moving the powder coater (28) into the second direction (32).

11. The apparatus (10) according to claim 10,
wherein
- the first reservoir (62) is, along the moving direction (20), arranged between the platform and a first overflow bin (72) for receiving excessive powder from the second reservoir (64); and
- the second reservoir (64) is, along the moving direction (20), arranged between the platform (14) and a second overflow (74) bin for receiving excessive powder from the first reservoir (62).

12. A method for additively manufacturing at least one component (12) by an apparatus (10) which comprises:
- at least one platform (14); and
- at least one powder coater (28) which is translationally moved along a moving direction (20) in relation to the platform (14), wherein:
∘ the powder coater (28) is translationally moved into a first direction (30) in relation to the platform (14) so as to apply powder (22) for additively manufacturing the component (12) onto the platform (14), the first direction (30) coinciding with the moving direction (20);
∘ the powder coater (28) is translationally moved into a second direction (32) in relation to the platform (14) so as to apply powder (22) for additively manufacturing the component (12) onto the platform (14), the second direction (32) coinciding with the moving direction (20), and the second direction (32) being opposite to the first direction (30);
∘ the powder coater (28) comprises a first blade (34) for applying the powder (22) onto the platform (14) when moving the powder coater (28) into the first direction (30);
∘ the powder coater (28) comprises a second blade (36) for applying powder (22) onto the platform (14) when moving the powder coater (28) into the second direction (32);
∘ the blades (34, 36) are arranged, along the moving direction (20), opposite each other; and
∘ the blades (34, 36) are, in relation to each other, translationally moved along a third direction (26) extending obliquely or perpendicularly in relation to the moving direction (20).

13. The method according to claim 12,
wherein:
- whilst moving the powder coater (28) into the first direction (30), the second blade (36) is arranged in front of the first blade (34) with respect to the first direction (30); and
- whilst moving the powder coater (28) into the second direction (32), the first blade (34) is arranged in front of the second blade (36) with respect to the second direction (32) .

14. The method according to claim 12 or 13,
wherein:
- whilst moving the powder coater (28) into the first direction (30), the first blade (34) is, along the third direction (26), arranged closer to the platform (14) than the second blade (34); and
- whilst moving the powder coater (28) into the second direction (32), the second blade (36) is, along the third direction (26), arranged closer to the platform (14) than the first blade (34).
